# EUROPÄISCHE PATENTANMELDUNG

(11) **EP 1 508 467 A1**
(43) Veröffentlichungstag der Anmeldung: **23.02.2005**
(21) Anmeldenummer: 04018364.2
(22) Anmeldetag: 03.08.2004
(51) Int. Cl.: B60K 31/00

(54) **Steuersystem für eine Funktionseinheit in einem Kraftfahrzeug**

(30) Priorität: 21.08.2003 DE 10338458
(71) Anmelder: ArvinMeritor GmbH, 63128 Dietzenbach (DE)
(72) Erfinder: Heyn, Detlef, 35274 Kirchhaim (DE)
(74) Vertreter: Strass, Jürgen

(57) **Zusammenfassung**

Ein Steuersystem für eine Funktionseinheit (16) in einem Kraftfahrzeug (10) umfaßt eine Steuereinheit (14). Die Steuereinheit (14) kommuniziert mit der Funktionseinheit (16). Die Steuereinheit (16) ist zur Verarbeitung von ortsbestimmenden Signalen eines GPS-Systems ausgelegt und kann in Abhängigkeit der GPS-Signale eine spezifische Einstellung der Funktionseinheit (16) vomehmen.

## Beschreibung

Die Erfindung betrifft ein Steuersystem für wenigstens eine Funktionseinheit in einem Kraftfahrzeug, mit einer Steuereinheit, die mit der Funktionseinheit kommuniziert.

Bestimmte elektronische Funktionseinheiten in einem Kraftfahrzeug müssen speziellen Anforderungen des Landes genügen, in das das Fahrzeug ausgeliefert wird. So gelten beispielsweise in Europa andere Bestimmungen als in den USA bezüglich der Federrate bei Einklemmschutzsystemen, die bei der Ansteuerung von Schiebedach- und Fensterheberantrieben eingehalten werden müssen. Aber auch bei anderen Funktionseinheiten, wie etwa Radioempfängern etc. besteht ein Bedarf, die Parametrisierung und/oder Funktionalität an die Gegebenheiten des jeweiligen Landes anzupassen. Üblicherweise wird derzeit eine feste, programmierbare oder manuell über Hardware hergestellte Ländercodierung realisiert. Dadurch steigt aber die Variantenvielfalt ansonsten identischer elektronischer Baugruppen und deren Zuleitungen. Funktionseinheiten, die gleichzeitig mehreren landesspezifischen Anforderungen genügen, sind als Produkte entweder überhaupt nicht oder nur unter sehr hohem zeitlichen und kostenintensivem Entwicklungsaufwand realisierbar, meist auf Kosten der Leistungsfähigkeit (z.B. geringere Klemmkräfte bei Schiebedächern und Fensterhebern) und/oder der Funktionalität der Funktionseinheit.

Aufgabe der Erfindung ist es, eine flexible Anpassung einer Funktionseinheit in einem Kraftfahrzeug an landesspezifische Anforderungen zu ermöglichen.

Zur Lösung dieser Aufgabe wird vorgeschlagen, ein Steuersystem der eingangs genannten Art dahingehend weiterzubilden, daß die Steuereinheit zur Verarbeitung von ortsbestimmenden Signalen eines GPS-Systems ausgelegt ist und in Abhängigkeit der GPS-Signale eine spezifische Einstellung der Funktionseinheit vornehmen kann. Unter "Einstellung der Funktionseinheit" ist in diesem Zusammenhang allgemein die Zu/Abschaltung und/oder die Anpassung bestimmter Funktionen der Funktionseinheit an landesspezifische Bestimmungen oder Vorgaben zu verstehen. Anhand der GPS-Signale kann der genaue Standort des Fahrzeugs lokalisiert werden, so daß auf der Grundlage dieser Information eine gewünschte Einstellung der Funktionseinheit automatisch durch die Steuereinheit vorgenommen werden kann. Es müssen vor oder nach der Auslieferung keine Änderungen mehr von Hand am Fahrzeug vorgenommen werden.

Vorzugsweise umfaßt das erfindungsgemäße Steuersystem eine am Fahrzeug angeordnete, mit der Steuereinheit verbundene Empfangseinrichtung zum Empfang der GPS-Signale. Die Empfangseinrichtung kann insbesondere Teil eines Fahrzeug-Navigationssystems sein, so daß die ohnehin für die Navigation des Fahrzeugs benötigten Daten gleichzeitig für die entsprechende Einstellung der Funktionseinheit genutzt werden können.

Gemäß einer Weiterbildung der Erfindung ist die Steuereinheit mit mehreren Funktionseinheiten verbunden. So kann z.B. ein komplettes Dachmodul mit mehreren Funktionseinheiten (Schiebedachansteuerung, Innenraumbeleuchtung, Radioempfänger etc.) mit einem Dachknotensystem zur Verfügung gestellt werden, das eine landesspezifische Einstellung dieser Funktionseinheiten gewährleistet.

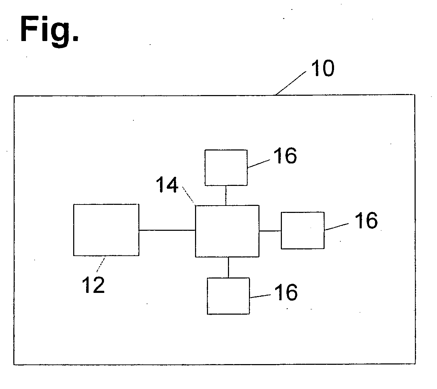

Weitere Merkmale und Vorteile der Erfindung ergeben sich aus der nachfolgenden Beschreibung eines Ausführungsbeispiels und aus der beigefügten Zeichnung, auf die Bezug genommen wird. In der Zeichnung zeigt die einzige Figur eine schematische Darstellung eines erfindungsgemäßen Steuersystems für eine Funktionseinheit in einem Kraftfahrzeug.

Das in der Figur beispielhaft dargestellte Steuersystem umfaßt eine an einem Kraftfahrzeug 10 vorgesehene Empfangseinrichtung 12 für GPS-(Global Positioning System)-Signale, die Teil eines Navigationssystems des Fahrzeugs 10 ist. Die Empfangseinrichtung 12 ist direkt oder indirekt mit einer Steuereinheit 14 verbunden, über die eine, oder wie in der Figur gezeigt, mehrere Funktionseinheiten 16 im Fahrzeug 10 angesprochen werden können. Die Funktionseinheiten 16 können insbesondere Schiebedach- und Fensterheberansteuerungen und andere Systeme mit Einklemmschutz, aber auch Innenraumbeleuchtungen, Radioempfänger, Insassenschutzeinrichtungen (z.B. Airbagsysteme, auch in Verbindung mit einem Kindersitz), Motorsteuerungen (Klopfsensor), Verriegelungsanlagen und alle weiteren Systeme sein, für die ein Bedarf nach einer landesspezifischen Einstellung besteht.

Die Empfangseinrichtung 12 empfängt und decodiert die ortsbestimmenden GPS-Signale, die im wesentlichen den Längen- und Breitengrad des aktuellen Fahrzeugstandorts angeben. Diese Information wird an die Steuereinheit 14 übertragen. Die Steuereinheit 14 umfaßt einen Speicher, in der eine elektronische Landkarte abgelegt ist, so daß die Steuereinheit 14 anhand des Längen- und Breitengrads das Land oder die Region bestimmen kann, in der sich das Fahrzeug 10 befindet. In der Steuereinheit 14 ist ferner eine elektronische Tabelle abgelegt, in der jedem Land bzw. jeder Region spezifische Parameter zugewiesen sind. Diese Parameter werden dann für eine landesspezifische Einstellung der Funktionseinheiten 16 benutzt. Unter Einstellung der Funktionseinheit ist in diesem Zusammenhang - wie eingangs bereits erwähnt - allgemein die Zu/Abschaltung und/oder die Anpassung bestimmter Funktionen der Funktionseinheit 16 an landesspezifische Bestimmungen oder Vorgaben zu verstehen.

Die Verbindungen zwischen den einzelnen Komponenten des Steuersystems können über konventionelle Leitungen oder zumindest teilweise drahtlos (insbesondere durch Funkübertragung) realisiert sein. Im Falle einer drahtlosen Kommunikation sind die beteiligten Komponenten mit geeigneten Sende- bzw. Empfangseinrichtungen ausgestattet.

Die Steuereinheit 14 kann an einer beliebigen Stelle im Fahrzeug 10 angeordnet und muß nicht notwendigerweise eine separate Baueinheit sein. Vorzugsweise ist für jede Funktionseinheit 16 eine eigene, in die Funktionseinheit 16 integrierte Steuereinheit 14 vorgesehen. Eine solche Baugruppe aus Funktionseinheit 16 und Steuereinheit 14 ist in gewissem Maße "autark" und kann unabhängig von einem Bussystem eingesetzt werden. Es ist aber auch möglich, die Steuereinheit 14 an ein ohnehin vorhandenes Bussystem im Fahrzeug 10 anzuschließen, über das die decodierten GPS-Signale der Steuereinheit 14 zugeführt werden.

### Bezugszeichenliste

- 10: Kraftfahrzeug
- 12: Empfangseinrichtung
- 14: Steuereinheit
- 16: Funktionseinheit

## Patentansprüche

1. Steuersystem für wenigstens eine Funktionseinheit (16) in einem Kraftfahrzeug (10), mit einer Steuereinheit (14), die mit der Funktionseinheit (16) kommuniziert, **dadurch gekennzeichnet, daß** die Steuereinheit (14) zur Verarbeitung von ortsbestimmenden Signalen eines GPS-Systems ausgelegt ist und in Abhängigkeit der GPS-Signale eine spezifische Einstellung der Funktionseinheit (16) vornehmen kann.

2. Steuersystem nach Anspruch 1, **dadurch gekennzeichnet, daß** das Steuersystem eine am Fahrzeug (10) angeordnete, mit der Steuereinheit (14) verbundene Empfangseinrichtung (12) zum Empfang der GPS-Signale umfaßt.

3. Steuersystem nach Anspruch 2, **dadurch gekennzeichnet, daß** die Empfangseinrichtung (12) Teil eines Fahrzeug-Navigationssystems ist.

4. Steuersystem nach Anspruch 2 oder 3, **dadurch gekennzeichnet, daß** die Kommunikation zwischen der Empfangseinrichtung (12) und der Steuereinheit (14) zumindest teilweise drahtlos, insbesondere durch Funkübertragung erfolgt.

5. Steuersystem nach einem der vorhergehenden Ansprüche, **dadurch gekennzeichnet, daß** die Kommunikation zwischen der Steuereinheit (14) und der Funktionseinheit (16) zumindest teilweise drahtlos, insbesondere durch Funkübertragung erfolgt.

6. Steuersystem nach einem der vorhergehenden Ansprüche, **dadurch gekennzeichnet, daß** die Funktionseinheit ein Schiebedachantrieb, ein Fensterheberantrieb, eine Innenraumbeleuchtung, ein Radioempfänger, eine Insassenschutzeinrichtung, eine Motorsteuerung oder eine Verriegelungsanlage ist.

7. Steuersystem nach einem der vorhergehenden Ansprüche, **dadurch gekennzeichnet, daß** die Steuereinheit (14) mit mehreren verschiedenen Funktionseinheiten (16) verbunden ist und eine spezifische Einstellung der verschiedenen Funktionseinheiten (16) vornehmen kann.
